Europäisches Patentamt

European Patent Office

Office européen des brevets

(11) Publication number: **0 042 986**
**B1**

(12) **EUROPEAN PATENT SPECIFICATION**

(45) Date of publication of patent specification: **28.11.84**

(51) Int. Cl.³: **G 11 B 15/66**

(21) Application number: **81104224.1**

(22) Date of filing: **03.06.81**

(54) Web transport apparatus and method of threading such apparatus.

(30) Priority: **30.06.80 US 164733**
**30.06.80 US 164732**

(43) Date of publication of application:
**06.01.82 Bulletin 82/01**

(45) Publication of the grant of the patent:
**28.11.84 Bulletin 84/48**

(84) Designated Contracting States:
**CH DE FR GB IT LI NL SE**

(56) References cited:
**GB-A-1 167 445**
**US-A-3 244 378**
**US-A-3 643 889**
**US-A-4 236 682**

(73) Proprietor: **International Business Machines Corporation**
**Old Orchard Road**
**Armonk, N.Y. 10504 (US)**

(72) Inventor: **Crawford, Roy Patrick**
**14711 Aloha**
**Saratoga California 95070 (US)**
Inventor: **Gilovich, Paul Tnothony**
**18701 Kosich Drive**
**Saratoga California 95070 (US)**
Inventor: **McMurtry, David Harwood**
**5945 E. Paseo Crimarron**
**Tucson Arizona 85715 (US)**
Inventor: **Cranna, Darlene Kari Nora**
**9800 E. Rosewood Street**
**Tucson Arizona 85710 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Description

The invention realtes to a web transport apparatus and a method of threading such apparatus. Specifically the invention is concerned with automatic tape or web threading methods and apparatus for magnetic tape transports and, in particular to an automatic tape threading method and apparatus for threading the leading edge of magnetic tape from a supply reel through a nonlinear tape path past a magnetic transducer to a take-up reel of the tape transport.

Various arrangements are suggested in the prior art for automatically threading flexible web material from a supply reel to a take-up reel. The functions which the various threading mechanisms must perform are dependent, to a great extent, on the particular web transport mechanism with which the particular automatic threading mechanism must cooperate. Automatic threading mechanisms have been shown to be quite useful in connection with magnetic tape transport devices which move the tape media past a stationary magnetic transducer for the reading of previously stored information or for the storage of new information. For a number of well-known reasons, it is desirable to keep the segment of the tape that is being read or written on by the magnetic transducer as close as possible to the flux gap of the transducer and, also, to move the tape relative to the transducer at a substantially constant speed during reading and writing. Constraints such as these, plus others, result in the tape path between the supply reel and the take-up reel of a magnetic tape transport being somewhat complex and not linear. As tape paths have become more complex and magnetic tape thinner, and hence, more flexible, the prior art automatic threading arrangements, such as the pneumatic guiding of the end of the tape or providing a leader on the take-up reel which is automatically coupled to the end of the tape on the supply reel, have all suffered from one or more disadvantages.

UK Specification No. 1,167,445 (Grundig) describes signal recording and playback apparatus comprising web transport apparatus for transferring an elongated flexible web on a supply reel to a take-up reel over a predetermined path. The transport apparatus comprises a mechanism for moving a coupling device secured to one end of a leader tape along a track adjacent and substantially parallel to the predetermined path to carry the leading end of the web from the supply reel to the take-up reel. The other end of the leader tape is anchored to the take-up reel at a position radially spaced from the axis of that reel.

The coupled Grundig leader tape provides, in effect, an extension of the flexible web and the extension it provides has to be wound on the take-up reel to carry the coupling device along the track. To permit this the Grundig take-up reel has to be of a complex construction, including a lost motion connection drive between the two spool portion.

It is therefore an object of the present invention to provide improved web transport apparatus which does not require the use of a leader tape permanently anchored to the take-up reel and in which the take-up reel is of relatively simple construction.

US Specification No. 3,643,889 (Krause) describes a threading system for threading a flexible tape over a predetermined path from a supply reel to a similar take-up reel. The system comprises a mechanism for moving a shuttle device along a track adjacent and substantially parallel to the predetermined path to carry the leading end of the tape from the supply reel to the take-up reel.

In a first embodiment the Krause shuttle device consists of a carriage carrying a pivotally movable cantilevered arm having a vacuum outlet at its free end. In use the vacuum outlet picks up the leading end of the tape from the supply reel, carries it to the take-up reel and then releases it. In a second embodiment the pivotally movable arm is replaced by a pivotally movable section of the track. In both embodiments relative complex mechanical constructions are required.

It is another object of the invention to provide improved web transport apparatus which is of relatively simple construction and which does not require the use of pivotally movable arms or tracks to effect threading of the web.

The foregoing objects are obtained in web transport apparatus in which a first coupling part, releasably coupled to the leading end of the web, is moved over a predetermined path and positioned concentrically within the take-up reel for rotational movement therewith during winding and unwinding of the web. Such apparatus enables the predetermined path to be indirect and of a complex shape and avoids the need to decouple during take-up rotation. This assists towards a fast repositioning of the web on the supply reel with the first coupling part ready to be connected to the web of another supply reel.

Accordingly the invention provides web transport apparatus for transferring an elongated flexible web on a supply reel to a take-up reel over a predetermined path, comprising mechanism for moving a shuttle device along a track adjacent and substantially parallel to the predetermined path to carry the leading end of the web from the supply reel to the take-up reel, characterised in that the shuttle device comprises a spigot or pin constituting a first coupling part capable of being releasably coupled to a second coupling part permanently secured to the leading end of the web, in that the take-up reel has a receiving recess into which the second coupling part is positioned by the first coupling part upon movement of the shuttle device to carry the leading end of the web to the take-up reel, and in that the second coupling part in the receiving recess is rotatable by and with the take-up reel with the axis of the first coupling part substantially co-linear with the axis of the take-up reel, whereby the first coupling part can remain stationary and coupled to the second coupling part during rotation of the take-up reel.

The invention also provides a method of threading the leading end of an elongated flexible web wound on a supply reel to a take-up reel over a predetermined path, the method comprising attaching, adjacent the supply reel, the leading end of the web to a shuttle device and moving the shuttle device along a track adjacent and substantially parallel to the predetermined path to carry the leading end of the web from the supply reel to the take-up reel, characterised by providing the shuttle device with a spigot or pin constituting a first coupling part with an axis substantially parallel to the rotational axis of the supply and take-up reels, permanently securing to the leading end of the web a second coupling part releasably coupling the first and second coupling parts, providing in the take-up reel a receiving recess for the second coupling part, moving the shuttle device to position the second coupling part in the receiving recess with the axis of the first coupling part substantially co-linear with the axis of the take-up reel, and rotating the take-up reel to carry the second coupling part with it while the first coupling part remains stationary and coupled to the second coupling part.

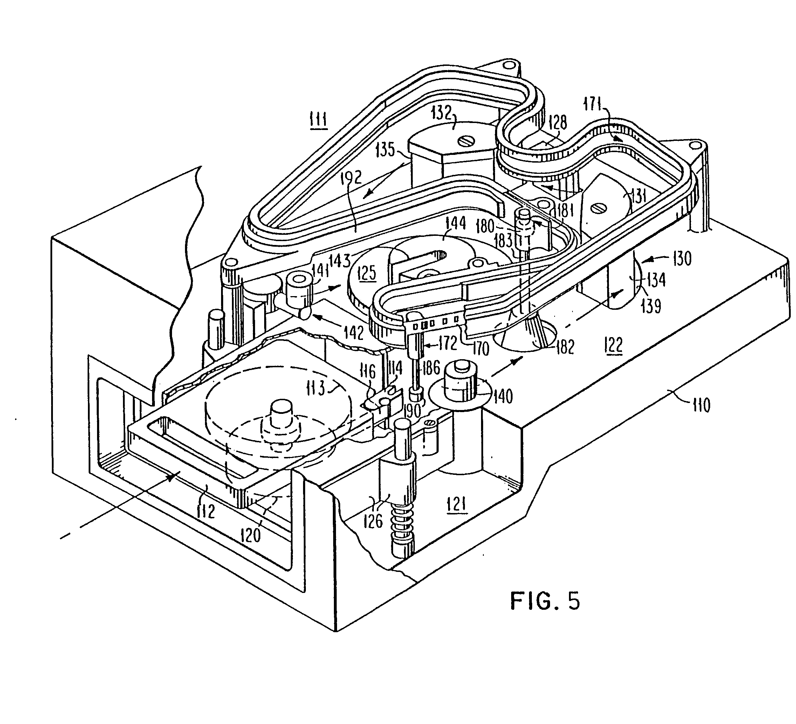

The foregoing and other objects, features and advantages of the invention will be apparent from the following more particular description of two preferred embodiments of the invention as illustrated in the accompanying drawings. It should be noted that divisional application 83 100 917.0 related to magnetic tape cartridges has been filed for a tape cartridge having a coupling device generally as shown as 18 in the present figure 4.

FIG. 1 illustrates a reel-to-reel type magnetic tape transport with which the present invention may be advantageously employed;

FIG. 2 is a plan view of an automatic tape threading apparatus embodying the present invention for use with the tape transport shown in FIG. 1;

FIG. 3 is a view in elevation of the apparatus shown in FIG. 2;

FIG. 4 is an enlarged sectional view illustrating in more detail the coupling device and its function relative to the leader block.

FIG. 5 is a perspective view of a second reel-to-reel magnetic tape drive having an automatic threading apparatus embodying the present invention.

FIG. 6 is a schematic plan view of the continuous guide channel of the threading apparatus shown in FIG. 5 and showing the tape path defined by the various components;

FIG. 7 is a perspective view in section of the channel shown in FIG. 6;

FIG. 8 is a view showing the details of the coupling device and the manner of attached the coupling device to the guide band and the leader block;

FIGS. 9, 10 and 11 illustrate the relative movements involved in coupling the device to the leader block attached to the tape.

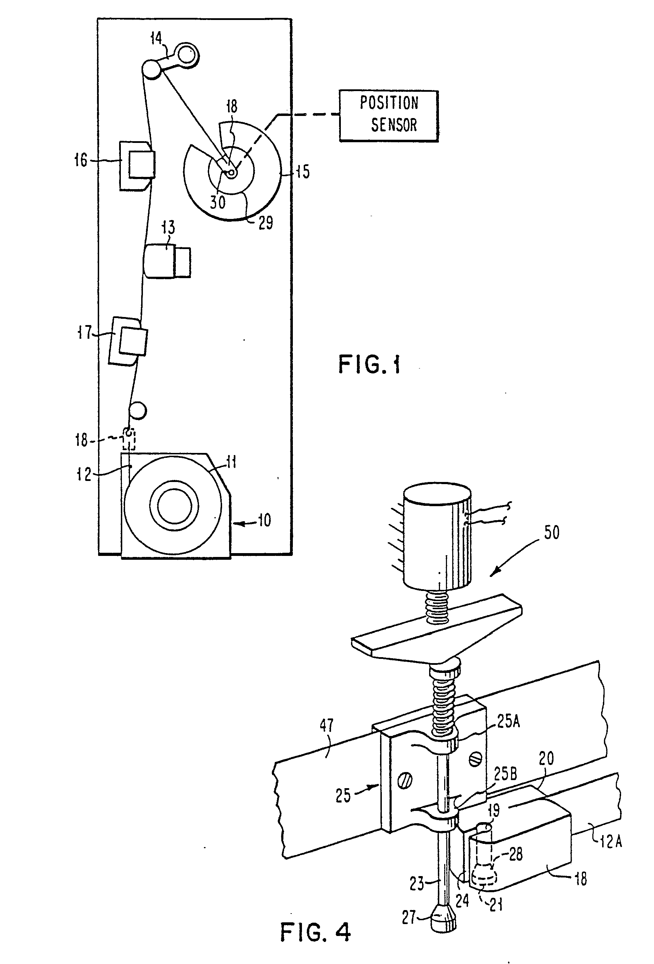

FIG. 1 shows in plan view a typical magnetic tape transport which includes a cartridge 10 for holding a supply reel 11 of conventional magnetic tape 12 which is threaded past a magnetic transducer 13 around a tension transducer 14 to the take-up reel 15. A pair of tape guides 16 and 17 is also illustrated whose function is to maintain tape 12 in flux transducing relationship with the flux gap of the magnetic transducer 13. The drive motors and the controls therefor are not illustrated in that any conventional prior art reel drive system may be employed. The details of the tension transducer 14 are also not illustrated since the overall function and operation of such devices are well-known in the art and since the details form no part of the present invention.

As shown in FIG. 1, the leading end of the tape 12 to be wound from the supply reel is provided with a leader block 18 which is shown in more detail in FIG. 4.

The construction of the leader block is such that it (1) can be selectively engaged by a coupling device of the automatic threading apparatus, and (2) can be positioned relative to the take-up reel so that tape can be wound on the take-up reel without disengaging the coupling device from the leader block.

With reference to FIG. 4, the leader block 18 shown therein is generally rectangular in shape and is provided with a pin receiving opening 19 at its leading edge. The trailing edge 20 of the leader block is provided with suitable means for attaching the leading end 12A of the tape. The pin receiving opening 19 has its axis parallel to the plane of the tape and in practice, block 18 may be releasably held by the cartridge 10 with the axis of the pin receiving opening 19 parallel to the axis of rotation of reel 11. The opening 19 extends through the block, 18, with the lower portion 21 of the opening being somewhat larger to accommodate the coupling pin 23 of the coupling device 25. A slot 24 extends from the front edge of the leader block to the opening 19 such that, in plan view, the bottom portion 21 of the block 18 comprises a passage having the shape of a keyhole. The size of the slot 24 is sufficient to permit the pin 23 on the coupling device 25 to slide through in an unrestricted manner into the opening 19 when relative movement occurs in a direction normal to the pin axis. Subsequent relative movement in a direction parallel to the axis of the pin 23 permits the cone-shaped end 27 of the pin to engate the cone-shaped recess 28 at the bottom 21 of the leader block 18. The pin 23 of coupling device 25 is attached for axial sliding movement relative to a band member 47 (to be discussed later) by means of bearing elements 25A and 25B fixedly attached to the band.

As shown in FIG. 1, the hub 29 of the take-up reel 15 is provided with a leader block receiving slot 30 which has a shape matching that of the leader block 18. The slot extends from the outer periphery of the hub 29 radially inward past the axis of rotation a sufficient distance to position the axis of the pin 23 of the coupling device coaxially with the axis of rotation of the take-up reel 15. With the pin 23 so positioned, the leader block 18 is free to rotate relative to the pin 23 as tape is wound on the take-up reel 15 so there is no necessity to disengage the coupling device of the threading apparatus from the leader block 18 during the winding operation. Alternatively, the pin 23 could be designed to rotate with the leader block 18 and the reel 15 relative to the remaining portion of the coupling device which is held stationary by the threading apparatus.

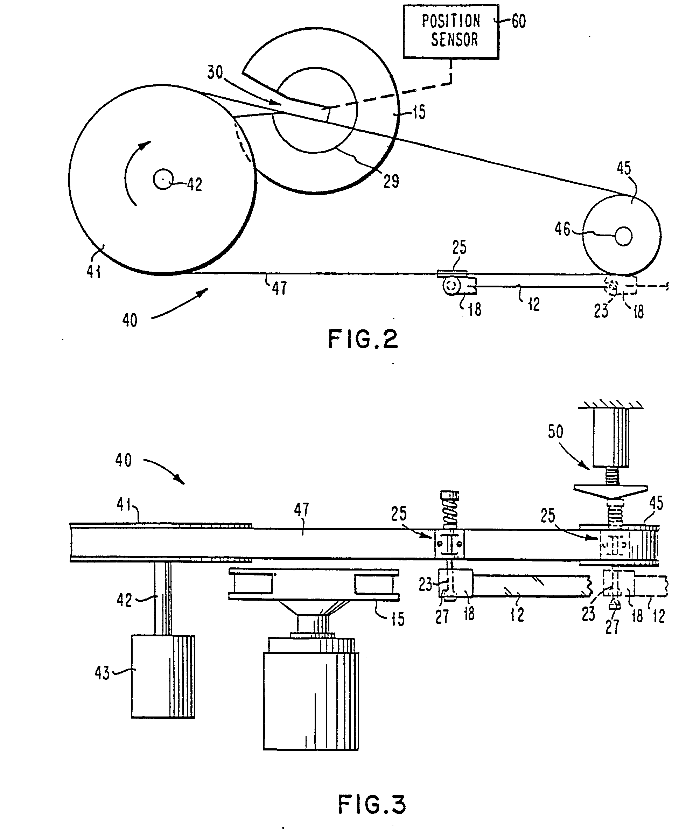

The mechanism 40 for moving the pin 23 from a first position where it is selectively coupled and uncoupled from the leader block 18 to a second position in the substantial center of the take-up reel 15 will now be described in connection with FIGS. 2 and 3. The mechanism, as shown, comprises pulley 41 which is coupled to a shaft 42 of motor 43. Motor 43 is mounted to position the shaft 42 parallel to the axis of rotation of the supply and take-up reels 11 and 15. The diameter of pulley 41 is related to the shape of a predetermined section of the tape path.

The mechanism further includes an idler pulley 45 which is journalled for rotation about an axis which is also parallel to the axis of rotation of the supply and take-up reels 11 and 15. The diameter of the pulley 45 and the position of its shaft 46 is chosen so that the pin 23 of the coupling device is positioned in a coupling relationship with the leader block 18 when the coupling device is attached to the continuous band member 47 which encircles the pulleys 41 and 45. As shown in FIG. 3, the pulleys 41 and 45 are positioned above the plane of the tape reels such that a point on the band 47 traces the tape path from the supply reel 11 to the take-up reel 15.

The coupling device 25, including pin 23, is permanently attached to the exterior surface of the band member, as shown in FIG. 4, and positions the pin 23 with its axis parallel to the pulley axis. The pin 23, as shown, is mounted for sliding movement axially between two positions. The first position is where the cone-shaped end 27 of the pin 23 is below the bottom surface of the leader block 18 shown in dotted line position in FIG. 3. The second position is where the cone-shaped portion 27 of the pin 23 is seated in the matching cone-shaped recess 28 provided in the leader block 18. The coupling of the pin 23 to the leader block 18 is accomplished by the relative motion of the two parts in first the direction normal to the pin axis and second vertically, as shown in FIG. 4. It will be recognized that the equivalent function can be achieved by the movement of the leader block 18 (or cartridge 10 and leader block 18) in orthogonal directions while the pin 23 is stationary with corresponding results. Various arrangements known in the art may be employed to achieve the function of obtaining the axial movement of the pin relative to the leader block. As shown in FIG. 4, the arrangement 50 involves a spring member biasing the pin upward and a solenoid operated lever which overcomes the normal biasing of the spring when the leader block is to be decoupled from the coupling device.

As mentioned previously, the band member 47 generally overlies the tape path so that when the driven pulley 41 is rotated in a clockwise direction, as seen in FIG. 2, the leader block 18 and the magnetic tape 12 attached thereto are pulled from the cartridge 10 and follow the path traversed by the coupling device 25 which is shown schematically in FIG. 2. As a result, the tape 12 is threaded through the tape guides 16 and 17 and past the transducer 13 around the tension transducer 14 to the take-up reel 15. The leader block 18 is positioned in the leader block receiving slot 30 of the take-up reel 15 since the tape reel 15 has been rotated to a point which will receive the leader block. The position of the take-up reel may be established by any suitable sensing device 60, as shown diagrammatically in FIG. 2. The coupling pin 23 is now disposed substantially coaxial with the axis of rotation of the take-up reel 15 so that rotation of the take-up reel 15, and hence, the leader block 18 can occur without any adverse affect on the coupling pin 23 or its mounting arrangement on the band 47.

The leader block 18 is returned over the tape path by either reversing the pulley motor 43 and simultaneously energizing the supply reel drive motor in the reverse direction to take up the slack tape 12 as the leader block 18 retreats, or by the supply reel motor being employed to pull the tape 12 back with the band 47 of the threading mechanism functioning solely as a guide for the leader block 18.

The band member 47 is flexible enough to permit some transverse movement of the leader block 18 and coupling device 25 relative to the actual tape path where it encounters a section of the tape path which involves only shallow curves, such as might occur at the guides 16 and 17 adjacent the magnetic transducer 13.

In tape transports which involve a tape path having a segment involving a more substantial "wrap" of the tape around the transducers, additional idler pulleys may also be employed to cause the band 47 to track the actual tape path.

The particular mechanism illustrated in FIGS. 2 and 3 for moving the coupling pin 23 once it has engaged the leader block 18 over the tape path to the general vicinity of the center of the take-up reel 15 is one example of a mechanism which can be designed to trace a prescribed circuitous tape path. However various other arrangements may be employed.

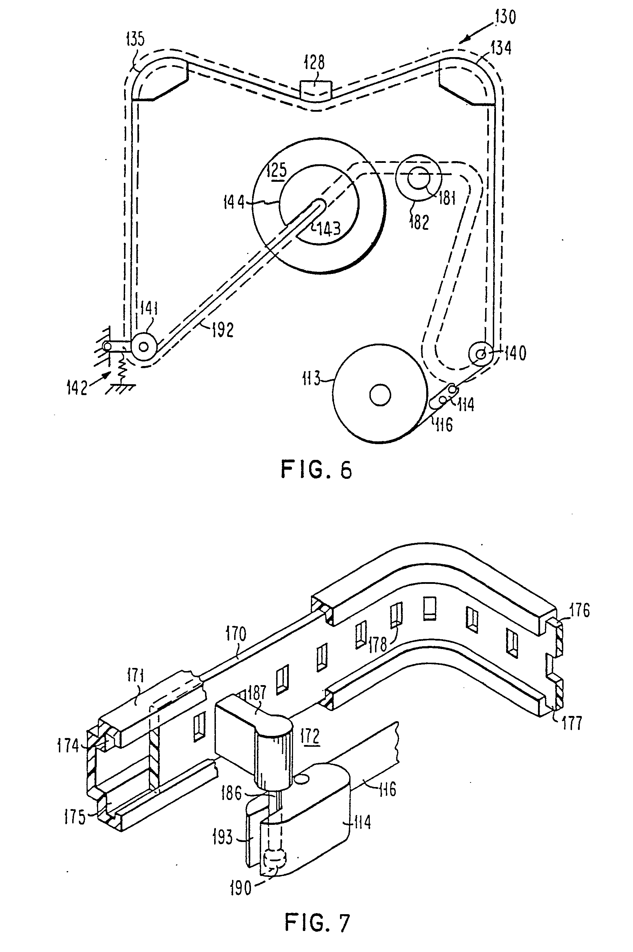

FIG. 5 is a perspective view of a reel-to-reel type magnetic tape drive in which the present invention has been embodied. As shown in FIG. 5 and in the diagrammatic plan view of the drive shown in FIG. 6, the drive consists generally of a tape transport apparatus and the automatic threading apparatus 111. The tape transport apparatus includes a baseplate 110 on which various standard components of a magnetic tape transport are mounted. The supply cartridge 112 is replaceable and contains a reel 113 of magnetic tape 116. A leader block 114 (best shown in FIG. 5) is disposed externally of the cartridge. The leading edge of the tape 116 is attached to the side of the leader block 114. The drive motor 120 for the supply reel 113 is mounted underneath the baseplate 110 so that its shaft extends normal to the surface 121 and slightly above the surface 122 of baseplate 110. The motor shaft is provided with a suitable clutching arrangement which permits the motor to be coupled to the hub of the supply reel 113 by movement of the cartridge 112 in a vertical direction, as shown in FIG. 5 normal to surface 122. As shown, this vertical movement is achieved by the cartridge loading mechanism, a portion of which is designated by reference character 126 in FIG. 5.

The take-up reel 125 is permanently attached to a motor (not shown) which is mounted to the baseplate 110 in a suitable fashion. The supply reel 113, when coupled to its motor, lies in substantially the same plane as the take-up reel 125 so that a point on the tape 116 moves when being transported in a plane normal to both motor shafts. Transfer of the tape 116 between the take-up reel 125 and the supply reel 113 past the magnetic transducer 128 is achieved by control of the respective driving motors for the reels, as is well known in the art.

Magnetic transducer 128 is part of the transducer assembly 130 which includes the guide bearings 131 and 132 disposed on opposite sides of the transducer 128. Guide bearings 131 and 132 are positioned in the tape path so that the uncoated side 116A of the magnetic tape 116 slides over the surfaces 134 and 135 which may be forced air lubricated surfaces.

Transducer assembly 130 is inserted through an opening 139 in the baseplate 110 and securely mounted thereto. The two remaining components which affect the shape of the tape path are the guide 140 and the roller 141 of the tension transducer 142.

Roller guide 140 is mounted on baseplate 110 with its axis parallel to the reel axis. The tension transducer 142 is attached to baseplate 110 so that the axis of the roller 141 is also parallel to the reel axis.

The details of the leader block 114, the construction of the hub 144 of the take-up reel 125, and the relationship of these elements to each other, are substantially as hereinbefore described in relation to Figures 1 to 4. In particular the hub 144 of the take-up reel 125 is provided with a radially extending slot 143, similar to the slot 30 (Fig. 3) for receiving the end of the leader block 114 which is permanently attached to the end of the tape on the supply reel. The relationship is such that when the leader block 114 is properly positioned in the slot, the tape 116 attached thereto is positioned to be wrapped on the hub 114 by merely rotating the take-up reel 125 since the length of the slot corresponds generally to the length of the leader block 114. During the winding process, the leader block 114 is maintained in the slot 143 of the take-up reel 125. The automatic threading apparatus provides two functional aspects. The first involves moving and guiding a coupling device 172 from the supply reel 112 to the take-up reel 125, and the second involves selectively coupling the leader block 114 at the supply reel in a manner to permit the leader block 114 to be rotated with the take-up reel without being uncoupled from the threading apparatus. The moving and guiding function is implemented, as shown in FIG. 5, by a sprocketed drive flexible tape loop 170 which is disposed in a sliding guiding relationship with a continuous channel 171.

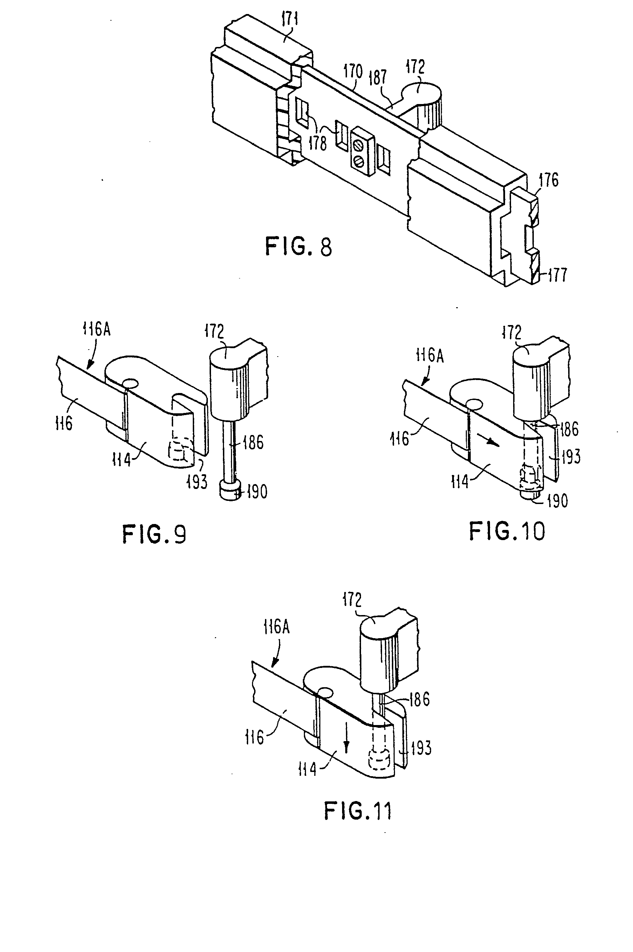

FIG. 7 shows the details of the channel 171 and the sprocketed guide tape 170. FIG. 8 shows the details of the coupling device 172. Channel 171 is provided with upper and lower slots 174 and 175, respectively, in which the upper and lower edges 176 and 177 of the sprocket tape member 170 are disposed. The surfaces of the slots 174 and 175 may be coated with suitable material to reduce any frictional drag on the guide tape 170. The slotted portions of the channel are held in alignment by the integral back portion shaped to provide the necessary rigidity to the channel and allow for the means for connecting the coupling device 172 to the tape 170.

The guide tape 170 is flexible enough along the lengthwise direction to readily conform to the various curves in the channel 171. As shown, the tape is provided with a series of sprocket holes 178 which cooperate with a sprocket gear 180 (FIG. 5) mounted in a housing 181 attached to the channel 71. A motor 182 drives shaft 183, shown in FIG. 5, to rotate sprocket gear 180 and, hence, move the sprocket tape 170 relative to channel 171.

The coupling device 172, shown in FIG. 7, comprises a coupling pin 186 and a member 187 which is suitably attached to sprocket tape 170 so as to position the axis of the coupling pin 186 substantially parallel to the reel axis. Pin 186 may be permanently secured in member 187 or, alternately, it could be mounted for rotation about its axis relative to member 187. The distal end 190 of the pin 186, which extends below the member 187, may be slightly longer than the axis of the pin receiving opening 193 in leader block 114, or the leader block may be notched at the bottom front edge. When the coupling device 172 is positioned at its home position, as shown in FIG. 5 by movement of the sprocketed tape, leader block 114 is coupled to pin 186 when the cartridge 112, shown in FIG. 5, is inserted into the tape drive and the hub of the supply reel is lowered to engage the supply reel drive motor.

Energizing the sprocket drive motor 182 causes movement of the tape 170, coupling device 172, and leader block 114 towards the take-up reel 125 which has been prepositioned with the radially extending leader block receiving slot 143 aligned parallel to the section 192 (FIG. 6) of the channel 171. The sprocket drive motor 182 remains energized to move tape 170 until the coupling device 172 has positioned the leader block 114 in the slot 144 of the take-up reel 125. At this point, the axis of pin 186 is coaxial with the axis of rotation of the take-up reel 125 so that the tape transport process over the established tape path may proceed by merely energizing the respective reel drive motors.

The leader block 114 is returned to its initial starting position after the tape 116 has been unwound from the hub of the take-up reel 125 merely by reversing the action of the sprocket drive motor 182 which returns the coupling device 172 to the position shown in FIG. 5.

The leader block 114 is decoupled from the pin 186 as a result of unloading the supply reel cartridge. The movement of the pin 186 during loading and unloading operations of the cartridge 112 are shown diagrammatically in FIGS. 9, 10 and 11. As shown, the cartridge is initially positioned with the opening 193 in the leader block 114 in line with the pin 186. As the cartridge is moved in the direction of the arrow in FIG. 5, the opening 193 is moved to embrace the pin 186 as shown in FIG. 10. Thereafter the cartridge is moved down onto the drive spindle of the motor 120 engaging the distal end 190 of the pin 186 in a corresponding enlarged seating at the lower end of the opening 193 as shown in FIG. 11.

It should also be apparent to those skilled in the art that while the disclosed embodiment describes a reel-to-reel type tape transport, the invention can be applied to other types of magnetic tape transports and would also be applicable to any type of web transport apparatus where a web wound on a supply reel is transported through one or more processing stations disposed along a complex web path to a take-up reel and then rewound onto the suply reel by the same transport mechanism.

It should also be apparent that for very wide webs, a second transport mechanism moving identically to the first transport mechanism could lie on the opposite side of the baseplate. The leader block would now look like a leader bar supported on both ends by the transport mechanism and operating through slots in the baseplate.

Hereinbefore there has been described a web transport which transfers elongated flexible web material wound on a supply reel to a web take-up reel over a predefined nonlinear web path which includes a web processing station, and which comprises an automatic threading apparatus for moving a leader block attached to the leading end of the web material wrapped on said supply reel over said web path from a first predefined position to a second position which couples said leader block to said take-up reel for subsequent conjoint rotational movement with said take-up reel about the axis of rotation of said take-up reel during winding and unwinding of web material on and off said take-up reel. The threading apparatus comprises a device adapted to selectively couple said leader block to said device at said first predetermined position which permits rotation of said block relative to said device about a first axis parallel to the axis of said reels; a mechanism for moving said device and said coupled leader block from said first predetermined position to said second position to dispose said first axis coaxially with the axis of said take-up reel and said web material in winding relationship to the hub of said take-up reel, for guiding said coupling device during movement over a predetermined path which corresponds to said tape path; and means for securing said coupling device to said mechanism.

This specification includes subject matter in common with that of European patent application No. 81 104 238.1 (EP—A—0 042 989), corresponding to U.S. application No. 164732 filed 30 June 1980, applicants reference TU9—79—006.

While the invention has been particularly shown and described with reference to the preferred embodiment thereof, it will be understood by those skilled in the art that various changes in the form and details may be made therein without departing from the scope of the claims.

**Claims**

1. Web transport apparatus in which an elongated flexible web (12; 116) wound on a supply reel is transferred (11; 113) to take a take-up reel (15; 125) over a predetermined path, comprising mechanism (40; 170, 171, 180) for moving a shuttle device (25; 172) along a track adjacent and substantially parallel to the predetermined path to carry the leading end (12A) of the web from the supply reel to the take-up reel, characterised in that the shuttle device comprises a spigot or pin (23, 27; 186, 190) constituting a first coupling part capable of being releasably coupled to a second coupling part (18; 114) permanently secured to the leading end of the web, in that the take-up reel has a receiving recess (30; 143) into which the second coupling part is positioned by the first coupling part upon movement of the shuttle device to carry the leading end of the web to the take-up reel, and in that the second coupling part in the receiving recess is rotatable by and with the take-up reel with the axis of the first coupling part substantially co-linear with the axis of the take-up reel, whereby the first coupling part can remain stationary and coupled to the second coupling part during rotation of the take-up reel.

2. Apparatus according to claim 1, further characterised in that the coupling parts are constructed and arranged so as to be coupled by a first relative movement in a direction substantially normal to the axis of the first coupling part followed by a second relative movement in a direction parallel to the axis of the first coupling part to secure the parts together.

3. Apparatus according to claim 2, further characterised by the provision of means (50; 126), disposed adjacent to the supply reel at the location at which the coupling parts are coupled together, for causing relative movement between the parts in the direction parallel to the axis of the first coupling part.

4. A method of threading the leading end of an elongated flexible web (12; 116) wound on a supply reel (11; 113) to a take-up reel (15; 125) over a predetermined path, the method of comprising attaching, adjacent the supply reel, the leading end of the web to a shuttle device (25; 172) and moving the shuttle device along a track adjacent and substantially parallel to the predetermined path to carry the leading end of the web from the supply reel to the take-up reel, characterised by providing the shuttle device with a spigot or pin (23, 27; 186, 190) constituting a first coupling part with an axis substantially parallel to the rotational axis of the supply and take-up reels, permanently securing to the leading end of the web a second coupling part (18; 114), releasably coupling the first and second coupling parts, providing in the take-up reel a receiving recess (30; 143) for the second coupling part, moving the shuttle device to position the second coupling part in the receiving recess with the axis of the first coupling part substantially co-linear with the axis of the take-up reel, and rotating the take-up reel to carry the second coupling part with it while the first coupling part remains stationary and coupled to the second coupling part.

5. A method according to claim 4, further characterised in that coupling of the coupling parts is effected by a first relative movement in a direction substantially normal to the axis of the first coupling part followed by a second relative movement in a direction parallel to the axis of the first coupling part.

**Revendications**

1. Appareil d'entraînement d'une bande continue, dans lequel une bande continue souple allongée (12; 116) enroulée sur une bobine débitrice est transférée (11; 113) sur une bobine réceptrice (15, 125), suivant une trajectoire prédéterminée, comprenant un mécanisme (40; 170, 171, 180) servant à déplacer un dispositif formant navette (25; 172) le long d'une piste voisine et essentiellement parallèle à la trajectoire prédéterminée de manière à entraîner l'extrémité avant (12A) de la bande continue depuis la bobine débitrice jusqu'à la bobine réceptrice, caractérisé en ce que le dispositif formant navette comporte une tige ou un doigt (23, 27; 186, 190) constituant une première pièce d'accouplement apte è être accouplée de façon détachable à une seconde pièce d'accouplement (18; 114) fixée à demeure sur l'extrémité avant de la bande continue, en ce que la bobine réceptrice comporte un renforcement formant logement (30; 143), dans lequel la seconde pièce d'accouplement est positionnée par la première pièce d'accouplement lors du déplacement du dispositif formant navette en vue d'amener l'extrémité avant de la bande continue jusqu'à la bobine réceptrice, et en ce que la second pièce d'accouplement située dans le renfoncement de réception peut être entraînée en rotation par et avec la bobine réceptrice, l'axe de la première pièce d'accouplement étant essentiellement colinéaire à l'axe de la bobine réceptrice, ce qui a pour effet que la première pièce d'accouplement peut rester fixe et accouplée à la seconde pièce d'accouplement pendant la rotation de la bobine réceptrice.

2. Appareil selon la revendication 1, caractérisé en outre en ce que les pièces d'accouplement sont construites et agencées de manière à être accouplées sous l'effet d'un premier déplacement relatif dans une direction essentiellement perpendiculaire à l'axe de la première pièce d'accouplement, à la suite de quoi intervient un second déplacement relatif suivant une direction parallèle à l'axe de la première pièce d'accouplement de manière à réaliser la fixation des pièces l'une à l'autre.

3. Appareil selon la revendication 2, caractérisé en outre par la présence de moyens (50; 126) disposés au voisinage de la bobine débitrice en un emplacement auquel les pièces d'accouplement sont accouplées l'une à l'autre de manière à provoquer un déplacement relatif entre ces dernières suivant la direction parallèle à l'axe de la première pièce d'acccouplement.

4. Procédé pour enfiler l'extrémité avant d'une bande continue souple allongée (12; 116), enroulée sur une bobine débitrice (11; 113), sur une bobine réceptrice (15; 125) en suivant une trajectoire prédéterminée, ce procédé comprenant la fixation, au voisinage de la bobine débitrice, de l'extrémité avant de la bande continue à un dispositif formant navette (25; 172), et le déplacement du dispositif formant navette le long d'une piste voisine de la trajectoire prédéterminée et essentiellement parallèle à cette dernière de manière à amener l'extrémité avant de la bande continue de la bobine débitrice jusqu'à la bobine réceptrice, caractérisé par le fait de munir le dispositif formant navette d'une tige ou d'un doigt (23, 27, 186, 190) constituant une première pièce d'accouplement possédant un axe essentiellement parallèle à l'axe de rotation de la bobine débitrice et de la bobine réceptrice, de fixer à demeure sur l'extrémité avant de la bande continue une seconde pièce d'accouplement (18; 114), d'accoupler de façon détachableles première et seconde pièces d'accouplement, de prévoir dans la bobine réceptrice un renfoncement de réception (30, 143) pour la seconde pièce d'accouplement, de déplacer le dispositif formant navette de manière à positionner la seconde pièce d'accouplement dans le renfoncement de réception, l'axe de la première pièce d'accouplement étant essentiellement colinéaire à l'axe de la bobine réceptrice, et d'entraîner en rotation la bobine réceptrice de manière à entraçner la seconde pièce d'accouplement avec cette dernière, tandis que la première pièce d'accouplement reste fixe et accouplée à la seconde pièce d'accouplement.

5. Procédé selon la revendication 4, caractérisé en outre en ce que l'accouplement des pièces d'accouplement est réalisé au moyen d'un premier déplacement relatif suivant une direction essentiellement perpendiculaire à l'axe de la première pièce d'accouplement, suivi d'un second déplacement relatif suivant une direction parallèle à l'axe de la première pièce d'accouplement.

**Patentansprüche**

1. Bandtransportvorrichtung, bei welcher ein auf eine Vorratsspule (11; 113) gewickeltes langgestrecktes biegsames Band (12; 116) auf eine Aufwickelspule (15; 125) längs eines bestimmten Weges überführt wird, wobei die Vorrichtung einen Mechanismus (40; 170, 171, 180) zur Bewegung einer Pendelvorrichtung (25; 172) längs einer an den bestimmten Weg angrenzenden und im wesentlichen dazu parallelen Bahn zur Mitführung des Vorderendes (12A) des Bandes von der Vorratsspule zur Aufwickelspule umfaßt, dadurch gekennzeichnet, daß die Pendelvorrichtung einen Zapfen bzw. Stift (23, 27; 186, 190) aufweist, der ein erstes Kopplungsteil bildet, welches lösbar mit einem zweiten Kopplungsteil (18; 114) gekoppelt werden kann, welches dauernd am Vorderende des Bandes befestigt ist, daß die Aufwickelspule eine Aufnahmeausnehming (30; 143) aufweist, in welcher das Zweite Kopplungsteil durch das erste Kopplungsteil bei der Bewegung der Pendelvorrichtung zur Mitführung des Vorderendes des Bandes in die Aufwickelspule angeordnet wird, und daß das zweite Kopplungsteil in der Aufnahmeausnehmung durch die und mit der Aufwickelspule mit zur Achse der Aufwickelspule im wesentlichen kolinearer Achse des ersten Kopplungsteile drehbar ist, wodurch das erste Kopplungsteil während der Drehung der Aufwickelspule stationär und mit dem zweiten Kopplungsteil gekoppelt bleiben kann.

2. Vorrichtung nach Anspruch 1 ferner dadurch gekennzeichnet, daß die Kopplungsteile so aufgebaut und angeordnet sind, daß sie durch eine erste Relativbewegung in einer im wesentlichen zur Achse des ersten Kopplungsteils senkrechten Richtung, gefolgt von einer zweiten Relativbewegung in einer zur Achse des ersten Kopplungsteils parallelen Richtung zur Befestigung der Teile aneinander gekoppelt werden.

3. Vorrichtung nach Anspruch 2, ferner gekennzeichnet durch das Vorsehen von Mitteln (50; 126), die benachbart zur Aufwickelspule an der Stelle, an der die Kopplungsteile aneinandergekoppelt werden, angeordnet sind, zur Bewirkung einer Relativbewegung zwischen den Teilen in der Richtung parallel zur Achse des ersten Kopplungsteils.

4. Verfahren zum Einfädeln des Vorderendes eines auf eine Vorratsspule (11; 113) gewickelten langgestreckten biegsamen Bandes (12; 116) in eine Aufwickelspule (15; 125) längs eines bestimmten Weges, wobei das Verfahren das Anbringen des Vorderendes des Bandes an einer Pendelvorrichtung (25; 172) im Bereich der Vorratsspule und das Bewegen der Pendelvorrichtung längs einer an den Bestimmten Weg angrenzenden und im wesentlichen dazun parallelen Bahn zur Mitführung des Vorderendes des Bandes von der Vorratsspule zur Aufwickelspule umfaßt, gekennzeichnet durch das Versehen der Pendelvorrichtung mit einem Zapfen bzw. Stift (23, 27; 186, 190), welcher ein erstes Kopplungsteil mit einer zur Drehachse von Vorrats- und Aufwickelspule im wesentlichen parallelen Achse bildet, das dauernde Befestigen eines zweiten Kopplungsteils (18; 114) am Vorderende des Bandes, das lösbare Koppeln von erstem und zweitem Kopplungsteil, das Vorsehen einer Aufnahmeausnehmung (30; 143) für das zweite Kopplungsteil in der Aufwickelspule, das Bewegen der Pendelvorrichtung zur Anordnung des zweiten Kopplungsteils in der Aufnahmeausnehmung mit zur Achse der Aufwickelspule im wesentlichen kolinearer Achse des ersten Kopplungsteils, und das Drehen der Aufwickelspule zur Mitnahme des zweiten Kopplungsteils, während das erste Kopplungsteil stationär und gekoppelt mit dem zweiten Kopplungsteil verbleibt.

5. Verfahren nach Anspruch 4, ferner dadurch gekennzeichnet, daß das Koppeln der Kopplungsteile durch eine erste Relativbewegung in einer zur Achse des ersten Kopplungssteils im wesentlichen senkrechten Richtung, gefolgt von einer zweiten Relativbewegung in einer zur Achse des ersten Kopplungsteils parallelen Richtung bewirkt wird.

FIG.1

FIG. 4

FIG.2

FIG.3

2

FIG. 5

FIG. 6

FIG. 7

4

FIG. 8

FIG.9

FIG.10

FIG.11